# EUROPÄISCHE PATENTSCHRIFT

(11) **EP 2 724 056 B1**
(45) Veröffentlichungstag und Bekanntmachung des Hinweises auf die Patenterteilung: **27.06.2018**
(21) Anmeldenummer: 11793684.9
(22) Anmeldetag: 10.12.2011
(51) Int. Cl.: F16H 63/34

(54) **KRAFTFAHRZEUGPARKSPERRENVORRICHTUNG UND VERFAHREN ZUR ENTRIEGELUNG EINES PARKSPERRENKOLBENS**
MOTOR VEHICLE PARKING LOCK DEVICE AND METHOD FOR UNLOCKING A PARK LOOCKING PISTON
DISPOSITIF FREIN DE STATIONNEMENT DE VÉHICULE AUTOMOBILE ET MÉTHODE POUR LE DISPOSITIF

(30) Priorität: 21.06.2011 DE 102011105068
(43) Veröffentlichungstag der Anmeldung: 30.04.2014
(73) Patentinhaber: Daimler AG, 70327 Stuttgart (DE)
(72) Erfinder: POLLACK, Bernd, 70180 Stuttgart (DE)
(74) Vertreter: JENSEN & SON
(86) Internationale Anmeldenummer: PCT/EP2011/006252
(87) Internationale Veröffentlichungsnummer: WO 2012/175102

(56) Entgegenhaltungen:
- EP-A2- 1 855 033
- DE-A1-102005 060 583
- DE-A1-102006 049 639
- DE-A1-102008 011 898
- JP-A- 2008 128 444
- US-A1- 2007 125 619

## Beschreibung

Die Erfindung betrifft eine Kraftfahrzeugparksperrenvorrichtung nach dem Oberbegriff des Anspruchs 1 und ein Verfahren zur Entriegelung eines Parksperrenkolbens einer Kraftfahrzeugparksperrenvorrichtung. Aus der DE 10 2005 060 583 A1 ist bereits eine Kraftfahrzeugparksperrenvorrichtung mit einem Verriegelungselement, das dazu vorgesehen ist, einen Parksperrenkolben formschlüssig zu verriegeln, und mit einer Entriegelungseinheit, die einen elektromagnetischen Aktuator aufweist, der zur Entriegelung des Parksperrenkolbens vorgesehen ist, bekannt.

Aus der DE 10 2006 049 639 A1 ist eine Parksperrvorrichtung bekannt, bei welcher mittels eines hydraulischen oder pneumatischen Aktuators die Parksperrvorrichtung verriegelt wird.

Aus der EP 1 855 033 A2 ist eine Kraftfahrzeugparksperrenvorrichtung mit einem hydraulisch oder pneumatisch betätigbaren Parksperrenkolben und einer Verriegelungsvorrichtung bekannt, wobei mittels einer Feder der Parksperrenkolben in eine Parkstellung gebracht werden kann.

Aus der gattungsgemäßen US 2007/125619 A1 ist eine Kraftfahrzeugparksperrenvorrichtung mit zumindest einem Verriegelungselement, das dazu vorgesehen ist, einen Parksperrenkolben formschlüssig zu verriegeln, und mit einer Entriegelungseinheit, die zumindest einen elektromagnetischen Aktuator aufweist, der zur Entriegelung des Parksperrenkolbens vorgesehen ist, bekannt. Dabei weist die Entriegelungseinheit einen parallel zu dem elektromagnetischen Aktuator wirkenden zweiten Aktuator auf, der dazu vorgesehen ist, zumindest bei einem Ausfall des elektromagnetischen Aktuators den Parksperrenkolben zu entriegeln.

Der Erfindung liegt insbesondere die Aufgabe zugrunde, eine einfache Kraftfahrzeugparksperrenvorrichtung und ein einfaches Verfahren zur Entriegelung eines Parksperrenkolbens einer solchen Kraftfahrzeugparksperrenvorrichtung bereitzustellen. Diese Aufgabe wird gemäß der Erfindung durch die Merkmale des Anspruchs 1 sowie durch ein Verfahren gemäß Anspruch 4 gelöst. Weitere Ausgestaltungen ergeben sich aus den Unteransprüchen.

Die Erfindung geht aus von einer Kraftfahrzeugparksperrenvorrichtung mit zumindest einem Verriegelungselement, das dazu vorgesehen ist, einen Parksperrenkolben formschlüssig zu verriegeln, und mit einer Entriegelungseinheit, die zumindest einen elektromagnetischen Aktuator aufweist, der zur Entriegelung des Parksperrenkolbens vorgesehen ist. Erfindungsgemäß weist die Entriegelungseinheit einen parallel zu dem elektromagnetischen Aktuator wirkenden hydraulischen oder pneumatischen Aktuator auf, der dazu vorgesehen ist, zumindest bei einem Ausfall des elektromagnetischen Aktuators den Parksperrenkolben zu entriegeln. Dadurch wird eine redundante Entriegelung des Parksperrenkolbens erreicht, wodurch der Parksperrenkolben auch bei einem Ausfall und/oder einem Defekt des elektromagnetischen Aktuators besonders vorteilhaft entriegelt werden kann. Dadurch wird eine Auslegung der Kraftfahrzeugparksperrenvorrichtung vereinfacht, wodurch die Kraftfahrzeugparksperrenvorrichtung besonders einfach auf einen größeren Betriebsbereich ausgelegt werden kann. Dadurch wird eine robuste und einfache Kraftfahrzeugparksperrenvorrichtung bereitgestellt. Unter einem "Parksperrenkolben" soll insbesondere ein axial beweglicher Kolben verstanden werden, der zum Einlegen und zum Auslegen einer Parksperre mit einer Parksperrenklinke bewegungstechnisch gekoppelt ist. Unter einem "Verriegeln des Parksperrenkolbens" soll insbesondere ein axiales Fixieren des Parksperrenkolbens und damit ein Halten eines eingelegten oder ausgelegten Zustands der Parksperre verstanden werden. Unter einem "Entriegeln des Parksperrenkolbens" soll insbesondere ein Auflösen der axialen Fixierung des Parksperrenkolbens verstanden werden. Unter "parallel" soll in diesem Zusammenhang insbesondere verstanden werden, dass eine durch den elektromagnetischen Aktuator erzeugbare magnetische Kraft und eine durch den hydraulischen oder pneumatischen Aktuator erzeugbare hydraulische oder pneumatische Kraft eine gleiche Wirkung aufweisen und zwar ein Entriegeln des Parksperrenkolbens, wobei die Entriegelung jeweils von dem elektromagnetischen Aktuator oder von dem hydraulischen oder pneumatischen Aktuator erfolgen kann. Unter "vorgesehen" soll insbesondere speziell programmiert, ausgelegt, ausgestattet und/oder angeordnet verstanden werden.

Weiter wird vorgeschlagen, dass das Verriegelungselement eine Formschlusskontur aufweist, die dazu vorgesehen ist, den Parksperrenkolben hydraulisch oder pneumatisch unüberdrückbar zu verriegeln. Dadurch wird eine sichere Verriegelung des Parksperrenkolbens erreicht, wodurch eine ungewollte Entriegelung des Parksperrenkolbens vermieden wird. Unter "hydraulisch oder pneumatisch unüberdrückbar" soll insbesondere verstanden werden, dass eine Entriegelung des Parksperrenkolbens durch eine auf den Parksperrenkolben wirkende hydraulische oder pneumatische Kraft, die insbesondere zur Schaltung des Parksperrenkolbens vorgesehen ist, unmöglich ist. Erfindungsgemäß weist die Kraftfahrzeugparksperrenvorrichtung einen einfach wirkenden Betätigungszylinder auf, der zur Schaltung des Parksperrenkolbens in eine Nicht-Parkstellung vorgesehen ist und eine Feder aufweist, die zur Schaltung des Parksperrenkolbens in eine Parkstellung vorgesehen ist. Dadurch wird die Kraftfahrzeugparksperrenvorrichtung vereinfacht. Unter einem "einfach wirkenden Betätigungszylinder" soll insbesondere ein Betätigungszylinder verstanden werden, der lediglich zur Ausbildung einer einzigen, zur hydraulischen oder pneumatischen Schaltung des Parksperrenkolbens vorgesehenen Druckkammer vorgesehen ist. Unter einem "Schalten des Parksperrenkolbens" soll insbesondere ein axiales Verschieben des Parksperrenkolbens in eine der Parkstellung oder der Nicht-Parkstellung zugeordnete axiale Position verstanden werden. Unter einer "Parkstellung" soll insbesondere eine Stellung verstanden werden, in der eine Parksperre eingelegt ist. Unter einer "Nicht-Parkstellung" soll insbesondere eine Stellung verstanden werden, in der die Parksperre ausgelegt ist und/oder die als eine Fahrstellung ausgebildet ist. Unter einer "Druckkammer" soll insbesondere eine hydraulisch oder pneumatisch beaufschlagbare Kammer verstanden werden, die zumindest eine feste Wand und zumindest eine bewegliche Wand umfasst. Erfindungsgemäß weist die Kraftfahrzeugparksperrenvorrichtung eine Betriebsmitteldruckversorgung und ein Schaltventil auf, das in einer ersten Ventilstellung den hydraulischen oder pneumatischen Aktuator und in einer zweiten Ventilstellung den Betätigungszylinder an die Betriebsmitteldruckversorgung strömungstechnisch anbindet. Dadurch werden die Parkstellung und die Nicht-Parkstellung besonders vorteilhaft geschaltet. Unter einer "Betriebsmitteldruckversorgung" soll insbesondere eine Einheit aus hydraulischen oder pneumatischen Elementen, wie beispielsweise einer Pumpe, einem Schaltventil, einer Leitung, einer Blende und/oder Ähnlichem, verstanden werden, die zur Versorgung des Schaltventils mit einem Betriebsmittel notwendig ist. Weiter ist es vorteilhaft, wenn das Verriegelungselement dazu vorgesehen ist, den Parksperrenkolben in der Parkstellung und in der Nicht-Parkstellung zu verriegeln. Dadurch kann eine besonders vorteilhafte Kraftfahrzeugparksperrenvorrichtung bereitgestellt werden, in der der Parksperrenkolben sicher in der Parkstellung und in der Nicht-Parkstellung verriegelt werden kann. Gemäß der Erfindung wird ein Verfahren zur Entriegelung eines Parksperrenkolbens einer erfindungsgemäßen Kraftfahrzeugparksperrenvorrichtung vorgeschlagen, in dem der Parksperrenkolben durch einen elektromagnetischen Aktuator und durch einen hydraulischen oder pneumatischen Aktuator entriegelt wird. Dadurch wird eine Notentriegelung besonders einfach realisiert. Erfindungsgemäß wird ein in einer Nicht-Parkstellung verriegelter Parksperrenkolben durch den hydraulischen oder pneumatischen Aktuator und ein in einer Parkstellung verriegelter Parksperrenkolben durch den elektromagnetischen Aktuator entriegelt. Dadurch werden eine vorteilhafte Entriegelung der Parkstellung und der Nicht-Parkstellung erreicht. Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

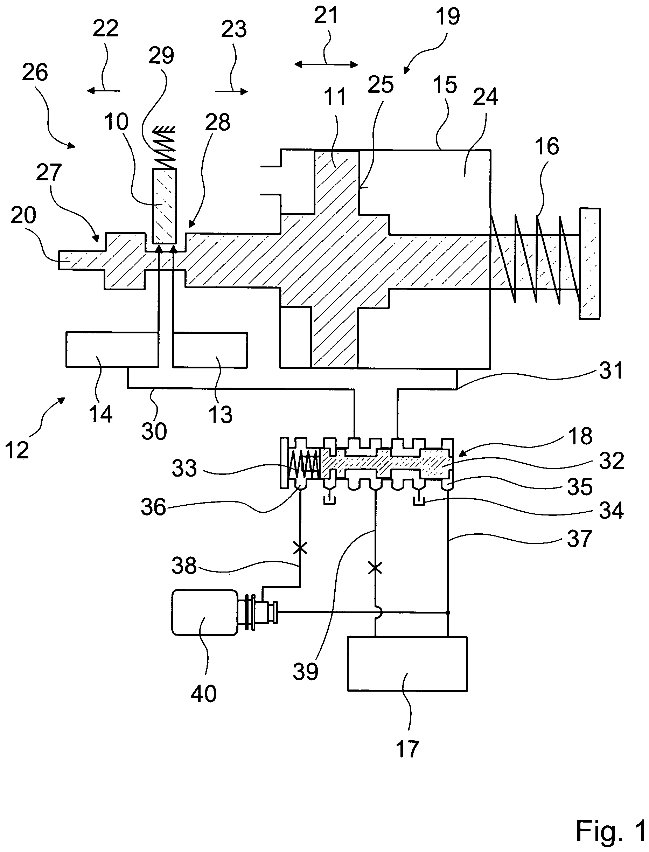

Die Figur 1 zeigt eine schematische Darstellung einer erfindungsgemäßen Kraftfahrzeugparksperrenvorrichtung. Die Kraftfahrzeugparksperrenvorrichtung ist Teil einer nicht näher dargestellten automatischen Getriebevorrichtung mit einer Parksperre. Die Getriebevorrichtung ist als eine Kraftfahrzeuggetriebevorrichtung ausgebildet. Die Kraftfahrzeugparksperrenvorrichtung ist dazu vorgesehen, mittels einer Parksperrenklinke einen nicht näher dargestellten Zahnradsatz der Getriebevorrichtung oder eine nicht näher dargestellte Welle der Getriebevorrichtung zu verblocken.

Die Kraftfahrzeugparksperrenvorrichtung weist zur Bereitstellung eines Betriebsmittels und damit eines Betriebsmitteldrucks eine Betriebsmitteldruckversorgung 17 auf. Die Betriebsmitteldruckversorgung 17 ist dazu vorgesehen, einen Arbeitsdruck und einen Steuerdruck einzustellen. Sie stellt einen konstanten Steuerdruck ein, der von dem Arbeitsdruck abgeregelt ist. Dabei soll unter einem "von dem Arbeitsdruck abgeregelten Steuerdruck" ein Steuerdruck verstanden werden, der bis zu einem maximalen Wert dem Arbeitsdruck entspricht. Grundsätzlich kann die Betriebsmitteldruckversorgung 17 auch einen konstanten Steuerdruck einstellen, der dem Arbeitsdruck entspricht.

Die Betriebsmitteldruckversorgung 17 umfasst zwei nicht näher dargestellte Pumpen. Eine der Pumpen ist als eine primäre Pumpe, die mit einem Motor eines die Kraftfahrzeugparksperrenvorrichtung aufweisenden Kraftfahrzeugs mechanisch gekoppelt ist, ausgebildet. Die andere Pumpe ist als eine zusätzliche Pumpe, die zur Unterstützung der primären Pumpe oder zur Bereitstellung des Betriebsmittels bei abgestelltem Motor vorgesehen ist, ausgebildet. Die zusätzliche Pumpe ist als eine elektrische Pumpe ausgebildet. Die Pumpen sind jeweils als eine Ölpumpe ausgebildet.
Zur Schaltung der Parksperre weist die Kraftfahrzeugparksperrenvorrichtung eine hydraulische Betätigungseinheit 19 auf. Die Betätigungseinheit 19 weist eine Parkstellung, in der die Parksperre eingelegt ist, und eine Nicht-Parkstellung, in der die Parksperre ausgelegt ist, auf. In der Parkstellung ist die Parksperre aktiviert und in der Nicht-Parkstellung ist die Parksperre deaktiviert.

Die Betätigungseinheit 19 ist einfach wirkend ausgebildet. Die Betätigungseinheit 19 umfasst zur Schaltung der Parksperre einen einfach wirkenden Betätigungszylinder 15, einen einseitig wirkenden Parksperrenkolben 11 und ein Betätigungselement 20. Der Betätigungszylinder 15 ist zur Schaltung und damit zur Bewegung des Parksperrenkolbens 11 in die Nicht-Parkstellung vorgesehen. Der Parksperrenkolben 11 ist axial verschiebbar in dem Betätigungszylinder 15 angeordnet. Der Parksperrenkolben 11 ist fest mit dem Betätigungselement 20 verbunden. Sie sind einstückig miteinander ausgeführt. Der Parksperrenkolben 11 ist mittels des Betätigungselements 20 bewegungstechnisch mit der Parksperrenklinke gekoppelt. Das Betätigungselement 20 ist mittels des Parksperrenkolbens 11 entlang seiner Haupterstreckungsrichtung 21 in zwei einander entgegengesetzte Schaltrichtungen 22, 23 axial verschiebbar. Das Betätigungselement 20 betätigt die Parksperrenklinke. Die Schaltrichtung 22 ist der Nicht-Parkstellung zugeordnet, d.h., eine axiale Bewegung des Parksperrenkolbens 11 und damit des Betätigungselements 20 in die Schaltrichtung 22 führt zum Auslegen der Parksperre. Die Schaltrichtung 23 ist der Parkstellung zugeordnet, d.h., eine axiale Bewegung des Parksperrenkolbens 11 und damit des Betätigungselements 20 in die Schaltrichtung 23 führt zum Einlegen der Parksperre. Das Betätigungselement 20 ist als eine Betätigungsstange ausgebildet.

Zur hydraulischen Einstellung der Nicht-Parkstellung weist die Betätigungseinheit 19 eine Druckkammer 24 auf. Die Druckkammer 24 ist zur Schaltung der Nicht-Parkstellung und damit zum Auslegen der Parksperre vorgesehen. Das Betätigungselement 20 ist durch eine Druckbeaufschlagung der Druckkammer 24 axial in die Schaltrichtung 22 verschiebbar. Die Druckkammer 24 ist durch den Betätigungszylinder 15 und den in dem Betätigungszylinder 15 angeordneten Parksperrenkolben 11 ausgebildet. Der Betätigungszylinder 15 nimmt zur Ausbildung der einzigen Druckkammer 24 den Parksperrenkolben 11 beweglich auf. Die Druckkammer 24 ist durch den Betätigungszylinder 15 und eine dem Betätigungselement 20 abgewandte Druckfläche 25 des Parksperrenkolbens 11 ausgebildet. Die Druckfläche 25 ist als eine bewegliche Wand der Druckkammer 24 ausgebildet. Die Druckfläche 25 des Parksperrenkolbens 11 wandelt einen in der Druckkammer 24 herrschenden Betriebsmitteldruck in eine Betätigungskraft auf den Parksperrenkolben 11 und somit auf das Betätigungselement 20 um.

Zur mechanischen und selbstständigen Schaltung des Parksperrenkolbens 11 in die Parkstellung weist die Betätigungseinheit 19 eine Feder 16 auf. Sie ist zur selbstständigen Einstellung der Parkstellung vorgesehen. Die Feder 16 ist zur drucklosen Einstellung der Parkstellung und damit zur Einstellung der Parkstellung ohne hydraulische Unterstützung vorgesehen. Die Feder 16 ist wirkungsmäßig zwischen dem Betätigungszylinder 15 und dem Parksperrenkolben 11 angeordnet. Sie ist außerhalb des Betätigungszylinders 15 angeordnet. Eine Federkraft der Feder 16 wirkt der durch den Betriebsmitteldruck in der Druckkammer 24 erzeugbaren Kraft entgegen. Die Federkraft der Feder 16 wirkt in die Schaltrichtung 23. Die Feder 16 ist zur Einstellung der Parkstellung bei druckloser Druckkammer 24 vorgesehen. Grundsätzlich kann die Feder 16 zur Einstellung der Parkstellung auch hydraulisch unterstützt werden.

Zur Verriegelung der Betätigungseinheit 19 und damit zur Verriegelung des Parksperrenkolbens 11 weist die Kraftfahrzeugparksperrenvorrichtung eine mechanische Verriegelungseinheit 26 auf. Sie ist zur Rastierung der Betätigungseinheit 19 und damit des Parksperrenkolbens 11 vorgesehen. Die Verriegelungseinheit 26 ist zur Verriegelung des Parksperrenkolbens 11 in der Parkstellung, und damit zur Verriegelung einer eingelegten Parksperre, und zur Verriegelung des Parksperrenkolbens 11 in der Nicht-Parkstellung, und damit zur Verriegelung einer ausgelegten Parksperre, vorgesehen. Die Verriegelungseinheit 26 ist hydraulisch unüberdrückbar ausgebildet. Sie ist durch eine auf den Parksperrenkolben 11 wirkende Kraft in der Druckkammer 24 nicht entriegelbar.

Die Verriegelungseinheit 26 umfasst zwei Formschlusskonturen 27, 28, die in dem Betätigungselement 20 eingebracht sind. Das Betätigungselement 20 bildet die Formschlusskonturen 27, 28 aus. Die Formschlusskontur 27 ist der Parkstellung und die Formschlusskontur 28 der Nicht-Parkstellung zugeordnet. Die Formschlusskonturen 27, 28 sind jeweils schrägflächenfrei ausgebildet, d.h., sie weisen keine Reibflächen auf, die zur reibschlüssigen Verriegelung und damit zur hydraulisch überdrückbaren Verriegelung vorgesehen sind.

Zur formschlüssigen Verriegelung des Parksperrenkolbens 11 in der Parkstellung und in der Nicht-Parkstellung weist die Verriegelungseinheit 26 ein Verriegelungselement 10 auf. Das Verriegelungselement 10 verriegelt den Parksperrenkolben 11 nach Bedarf in der Parkstellung oder in der Nicht-Parkstellung. In der Parkstellung greift das Verriegelungselement 10 in die Formschlusskontur 27 ein. In der Nicht-Parkstellung greift das Verriegelungselement 10 in die Formschlusskontur 28 ein. Durch Eingreifen des Verriegelungselements 10 in eine der Formschlusskonturen 27, 28 ist der Parksperrenkolben 11 formschlüssig und hydraulisch unüberdrückbar verriegelt. Das Verriegelungselement 10 weist eine zu den Formschlusskonturen 27, 28 korrespondierend ausgebildete Formschlusskontur auf. Die Formschlusskontur des Verriegelungselements 10 verriegelt den Parksperrenkolben 11 hydraulisch unüberdrückbar. Die Formschlusskontur des Verriegelungselements 10 ist schrägflächenfrei ausgebildet. Sie weist keine Reibflächen auf, wodurch eine unüberdrückbare Verriegelung resultiert. Bei einem Eingriff des Verriegelungselements 10 liegt die Formschlusskontur des Verriegelungselements 10 mit einer senkrechten Wand auf einer senkrechten Wand der entsprechenden Formschlusskontur 27, 28 an. Die Verriegelungseinheit 26 weist weiter eine Feder 29 auf, die das Verriegelungselement 10 gegen das Betätigungselement 20 drückt. Die Feder 29 drückt die Formschusskontur des Verriegelungselements 10 in die jeweilige Formschlusskontur 27, 28. Eine auf den in der Park- oder Nicht-Parkstellung verriegelten Parksperrenkolben 11 wirkende Verriegelungskraft resultiert durch das Verriegelungselement 10 und die Federkraft der Feder 16.

Zur Entriegelung des Parksperrenkolbens 11 weist die Kraftfahrzeugparksperrenvorrichtung eine Entriegelungseinheit 12 auf. Zur redundanten Entriegelung weist die Entriegelungseinheit 12 einen elektromagnetischen Aktuator 13 und einen hydraulischen Aktuator 14 auf. Der elektromagnetische Aktuator 13 und der hydraulische Aktuator 14 sind jeweils zur Entriegelung des Parksperrenkolbens 11 vorgesehen. Der Parksperrenkolben 11 kann durch den elektromagnetischen Aktuator 13 oder durch den hydraulischen Aktuator 14 entriegelt werden. Er wird zur Schaltung der Parkstellung durch den hydraulischen Aktuator 14 und zur Schaltung der Nicht-Parkstellung durch den elektromagnetischen Aktuator 13 entriegelt. Der in der Nicht-Parkstellung verriegelte Parksperrenkolben 11 wird durch den hydraulischen Aktuator 14 und der in der Parkstellung verriegelte Parksperrenkolben 11 durch den elektromagnetischen Aktuator 13 entriegelt.

Der elektromagnetische Aktuator 13 stellt zur Entriegelung des Parksperrenkolbens 11 eine auf das Verriegelungselement 10 wirkende magnetische Kraft bereit. Er entriegelt den Parksperrenkolben 11 zur Schaltung der Nicht-Parkstellung. Der elektromagnetische Aktuator 13 entriegelt den in der Parkstellung verriegelten Parksperrenkolben 11. Der elektromagnetische Aktuator 13 stellt zur Entriegelung eine magnetische Kraft bereit, die gegen eine Federkraft der Feder 29 wirkt. Der elektromagnetische Aktuator 13 löst zur Entriegelung einen Formschluss zwischen dem Verriegelungselement 10 und dem Parksperrenkolben 11 auf. Er drückt oder zieht das Verriegelungselement 10 aus der Formschlusskontur 27 heraus. Zur Entriegelung mittels des elektromagnetischen Aktuators 13 bestromt eine nicht näher dargestellte Steuer- und Regeleinheit der Kraftfahrzeugparksperrenvorrichtung den elektromagnetischen Aktuator 13, wodurch sich der Formschluss löst. Der elektromagnetische Aktuator 13 ist als ein Hubmagnet ausgebildet.

Der hydraulische Aktuator 14 wirkt parallel zu dem elektromagnetischen Aktuator 13. Der hydraulische Aktuator 14 stellt zur Entriegelung des Parksperrenkolbens 11 eine auf das Verriegelungselement 10 wirkende hydraulische Kraft bereit. Er entriegelt den Parksperrenkolben 11 zur Schaltung der Parkstellung. Der hydraulische Aktuator 14 entriegelt den in der Nicht-Parkstellung verriegelten Parksperrenkolben 11. Der hydraulische Aktuator 14 stellt zur Entriegelung eine hydraulische Kraft bereit, die gegen die Federkraft der Feder 29 wirkt. Der hydraulische Aktuator 14 löst zur Entriegelung einen Formschluss zwischen dem Verriegelungselement 10 und dem Parksperrenkolben 11. Er drückt oder zieht das Verriegelungselement 10 aus der Formschlusskontur 28 heraus. Zur Bereitstellung der hydraulischen Kraft und damit zur hydraulischen Entriegelung weist der hydraulische Aktuator 14 eine Druckkammer auf. Der Parksperrenkolben 11 ist durch eine Druckbeaufschlagung der Druckkammer des hydraulischen Aktuators 14 entriegelbar. Eine Druckfläche der Druckkammer des hydraulischen Aktuators 14 wandelt einen in der Druckkammer herrschenden Betriebsmitteldruck in eine Entriegelungskraft auf das Verriegelungselement 10 um, wobei die Entriegelungskraft gegen die Federkraft der Feder 29 wirkt.

Grundsätzlich kann der Aktuator 14 auch als ein pneumatischer Aktuator ausgebildet sein. Der elektromagnetische Aktuator 13 kann grundsätzlich auch zur Entriegelung des in der Nicht-Parkstellung verriegelten Parksperrenkolbens 11 vorgesehen sein und damit gleichzeitig und parallel mit dem hydraulischen Aktuator 14 zur Entriegelung des in der Nicht-Parkstellung verriegelten Parksperrenkolbens 11 auf das Verriegelungselement 10 einwirken. Dadurch kann die Entriegelung des in der Nicht-Parkstellung verriegelten Parksperrenkolbens 11 auch bei einem Ausfall des elektromagnetischen Aktuators 13 erfolgen. Der hydraulische Aktuator 14 ist somit insbesondere zur Entriegelung des Parksperrenkolbens 11 bei einem Ausfall des elektromagnetischen Aktuators 13 und damit zur Notentriegelung vorgesehen. Die hydraulisch unüberdrückbare Verriegelungseinheit 26 ist so ausgelegt, dass die Verriegelung der Parkstellung und der Nicht-Parkstellung lediglich mittels des elektromagnetischen Aktuators 13 oder mittels des hydraulischen Aktuators 14 gelöst werden kann.

Zur Versorgung der Druckkammer 24 und der Druckkammer des hydraulischen Aktuators 14 mit dem Arbeitsdruck weist die Kraftfahrzeugparksperrenvorrichtung ein selbstschaltendes Schaltventil 18 auf. Das Schaltventil 18 weist eine erste Ventilstellung und eine zweite Ventilstellung auf. In der ersten Ventilstellung bindet das Schaltventil 18 den hydraulischen Aktuator 14 strömungstechnisch an die Betriebsmitteldruckversorgung 17 an und trennt den Betätigungszylinder 15 strömungstechnisch von der Betriebsmitteldruckversorgung 17 (vgl. Fig. 1). In der ersten Ventilstellung versorgt das Schaltventil 18 die Druckkammer des hydraulischen Aktuators 14 mit dem Arbeitsdruck. In der zweiten Ventilstellung bindet das Schaltventil 18 den Betätigungszylinder 15 strömungstechnisch an die Betriebsmitteldruckversorgung 17 an und trennt strömungstechnisch den hydraulischen Aktuator 14 von der Betriebsmitteldruckversorgung 17. In der zweiten Ventilstellung versorgt das Schaltventil 18 die Druckkammer 24 des Betätigungszylinders 15 mit dem Arbeitsdruck. Die erste Ventilstellung ist der Parkstellung und die zweite Ventilstellung der Nicht-Parkstellung zugeordnet. Das Schaltventil 18 versorgt zur Schaltung der Parkstellung die Druckkammer des hydraulischen Aktuators 14 und zur Schaltung der Nicht-Parkstellung die Druckkammer 24 des Betätigungszylinders 15 mit dem Arbeitsdruck. Das Schaltventil 18 ist mittels einer Betriebsmitteldruckleitung 30 strömungstechnisch mit dem hydraulischen Aktuator 14 verbunden. Weiter ist das Schaltventil 18 mittels einer Betriebsmitteldruckleitung 31 strömungstechnisch mit dem Betätigungszylinder 15 verbunden.

Das Schaltventil 18 weist einen Schaltschieber 32 und eine wirkungsmäßig mit dem Schaltschieber 32 verbundene Feder 33 auf. Die Feder 33 ist dazu vorgesehen, den Schaltschieber 32 selbstständig in die erste Ventilstellung zu verschieben und damit selbstständig die erste Ventilstellung des Schaltventils 18 zu schalten. In der ersten Ventilstellung verbindet das Schaltventil 18 die Druckkammer 24 des Betätigungszylinders 15 mit einem drucklosen Betriebsmittelreservoir 34. Sie verbindet in der ersten Ventilstellung die Betriebsmitteldruckleitung 31 strömungstechnisch mit dem drucklosen Betriebsmittelreservoir 34.
Zur Bereitstellung einer gegen die Feder 33 wirkenden Kraft weist das Schaltventil 18 ein erstes Steuervolumen 35 auf. Das erste Steuervolumen 35 wirkt einer Federkraft der Feder 33 entgegen. Die Kraft in dem ersten Steuervolumen 35 ist dazu vorgesehen, den Schaltschieber 32 gegen die Federkraft der Feder 33 und damit aus der ersten Ventilstellung zu schieben. Sie ist zur Verschiebung des Schaltschiebers 32 in die zweite Ventilstellung vorgesehen. Die Kraft in dem ersten Steuervolumen 35 ist als ein Betriebsmitteldruck ausgebildet, der der Federkraft der Feder 33 entgegenwirkt. Sie ist als der konstante Steuerdruck, der von dem Arbeitsdruck abgeregelt ist, ausgebildet. Die erste Ventilstellung ist somit als eine Grundstellung und die zweite Ventilstellung als eine Schaltstellung des Schaltventils 18 ausgebildet.

Zur Bereitstellung einer mit der Feder 33 wirkenden Kraft weist das Schaltventil 18 ein zweites Steuervolumen 36 auf. Das zweite Steuervolumen 36 wirkt dem ersten Steuervolumen 35 entgegen. Die zwei Steuervolumen 35, 36 sind gegenüberliegend zueinander angeordnet. Das zweite Steuervolumen 36 wirkt zusätzlich zu der Federkraft der Feder 33. Es wirkt in eine gleiche Richtung wie die Federkraft der Feder 33. Die Kraft in dem zweiten Steuervolumen 36 ist dazu vorgesehen, den Schaltschieber 32 gegen das erste Steuervolumen 35 und damit aus der zweiten Ventilstellung zu schieben. Sie ist zur Verschiebung des Schaltschiebers 32 in die erste Ventilstellung vorgesehen. Die Kraft in dem zweiten Steuervolumen 36 ist als ein Betriebsmitteldruck ausgebildet, der mit der Federkraft der Feder 33 wirkt und der Kraft in dem ersten Steuervolumen 35 entgegenwirkt. Sie ist als der konstante Steuerdruck, der von dem Arbeitsdruck abgeregelt ist, ausgebildet. Die Feder 33 ist in dem zweiten Steuervolumen 36 angeordnet.

Zur Versorgung des ersten Steuervolumens 35 des Schaltventils 18 mit dem konstanten Steuerdruck weist die Kraftfahrzeugparksperrenvorrichtung eine Vorsteuerdruckleitung 37 auf. Die Vorsteuerdruckleitung 37 verbindet die Betriebsmitteldruckversorgung 17 strömungstechnisch mit dem ersten Steuervolumen 35. Die Betriebsmitteldruckversorgung 17 ist dazu vorgesehen, in der Vorsteuerdruckleitung 37 und damit in dem ersten Steuervolumen 35 des Schaltventils 18 den konstanten, von dem Arbeitsdruck abgeregelten Steuerdruck einzustellen.

Zur Versorgung des zweiten Steuervolumens 36 des Schaltventils 18 mit dem konstanten Steuerdruck weist die Kraftfahrzeugparksperrenvorrichtung eine Vorsteuerdruckleitung 38 auf. Die Vorsteuerdruckleitung 38 verbindet die Betriebsmitteldruckversorgung 17 strömungstechnisch mit dem zweiten Steuervolumen 36. Die Betriebsmitteldruckversorgung 17 ist dazu vorgesehen, in der Vorsteuerdruckleitung 38 und damit in dem zweiten Steuervolumen 36 des Schaltventils 18 den konstanten, von dem Arbeitsdruck abgeregelten Steuerdruck einzustellen.

Zur Versorgung des hydraulischen Aktuators 14 und des Betätigungszylinders 15 mit dem Arbeitsdruck weist die Kraftfahrzeugparksperrenvorrichtung eine Arbeitsdruckleitung 39 auf. Die Betriebsmitteldruckversorgung 17 ist dazu vorgesehen, in der Arbeitsdruckleitung 39 den Arbeitsdruck einzustellen. Sie ist dazu vorgesehen, den Arbeitsdruck in der Arbeitsdruckleitung 39 zur Schaltung der Nicht-Parkstellung und in einem anderen Betriebszustand zur Entriegelung des in der Nicht-Parkstellung verriegelten Parksperrenkolbens 11 einzustellen. Dabei verbindet das Schaltventil 18 in der ersten Ventilstellung die Arbeitsdruckleitung 39 strömungstechnisch mit der Druckkammer des hydraulischen Aktuator 14 und in der zweiten Ventilstellung die Arbeitsdruckleitung 39 strömungstechnisch mit der Druckkammer 24.

Zur Schaltung der zweiten Ventilstellung des Schaltventils 18 und damit zur strömungstechnischen Verbindung der Druckkammer 24 mit der Arbeitsdruckleitung 39 weist die Kraftfahrzeugparksperrenvorrichtung ein extern ansteuerbares Steuerventil 40 auf. Das Steuerventil 40 ist dazu vorgesehen, den Steuerdruck in dem zweiten Steuervolumen 36 einzustellen. Zur Einstellung des Steuerdrucks in dem zweiten Steuervolumen 36 verbindet und trennt das Steuerventil 40 die Vorsteuerdruckleitung 38 strömungstechnisch von der Betriebsmitteldruckversorgung 17. Zur Schaltung der ersten Ventilstellung verbindet das Steuerventil 40 die Betriebsmitteldruckversorgung 17 mit der Vorsteuerdruckleitung 38 und damit mit dem zweiten Steuervolumen 36. Zur Schaltung der zweiten Ventilstellung trennt das Steuerventil 40 die Betriebsmitteldruckversorgung 17 von der Vorsteuerdruckleitung 38 und damit von dem zweiten Steuervolumen 36. Das Steuerventil 40 ist dazu vorgesehen, die Vorsteuerdruckleitung 38, die strömungstechnisch mit dem Steuervolumen 36 des Schaltventils 18 verbunden ist, in einem Betriebszustand von der Vorsteuerdruckleitung 37 strömungstechnisch zu trennen und in einem anderen Betriebszustand mit der Vorsteuerdruckleitung 37 strömungstechnisch zu verbinden. In Abhängigkeit von einem externen Signal von der Steuer- und Regeleinheit verbindet das Steuerventil 40 die beiden Vorsteuerdruckleitungen 37, 38 strömungstechnisch miteinander, wodurch die Feder 33 selbstständig die erste Ventilstellung des Schaltventils 18 schaltet, oder trennt die beiden Vorsteuerdruckleitungen 37, 38 strömungstechnisch voneinander, wodurch der konstante Steuerdruck in dem ersten Steuervolumen 35 des Schaltventils 18 die Feder 33 überdrückt und die zweite Ventilstellung des Schaltventils 18 schaltet. Das Steuerventil 40 ist dazu vorgesehen, zwischen der Parkstellung und der Nicht-Parkstellung ohne eine mechanische Kopplung zwischen Bedienung und Mechanik umzuschalten, wobei zur Schaltung der Parkstellung der in der Nicht-Parkstellung verriegelte Parksperrenkolben 11 direkt hydraulisch entriegelt wird.

In einem Betriebszustand, in dem die Parksperre eingelegt und damit die Betätigungseinheit 19 in die Parkstellung geschaltet wird, aktiviert die Steuer- und Regeleinheit zur Entriegelung des in der Nicht-Parkstellung verriegelten Parksperrenkolbens 11 das Steuerventil 40, wodurch das Steuerventil 40 die Vorsteuerdruckleitungen 37, 38 strömungstechnisch miteinander verbindet. Dadurch herrscht in dem zweiten Steuervolumen 36, in dem die Feder 33 angeordnet ist, und in dem Steuervolumen 35 des Schaltventils 18 der gleiche konstante Steuerdruck, wodurch die Feder 33 den Schaltschieber 32 sofort in die erste Ventilstellung selbstständig verschiebt. Dadurch wird die Druckkammer 24 mit dem drucklosen Betriebsmittelreservoir 34 und die Druckkammer des hydraulischen Aktuators 14 mit der Arbeitsdruckleitung 39 strömungstechnisch verbunden, wodurch die Druckkammer des hydraulischen Aktuators 14 mit dem Arbeitsdruck beaufschlagt wird. Dadurch wirkt eine hydraulische Entriegelungskraft auf das Verriegelungselement 10, die der Federkraft der Feder 29 entgegenwirkt, wodurch das Verriegelungselement 10 aus der Formschlusskontur 28 bewegt und der Parksperrenkolben 11 entriegelt wird. Daraufhin verschiebt bzw. drückt die Feder 16 den entriegelten Parksperrenkolben 11 selbstständig in die Parkstellung. Wird die Betriebsmitteldruckversorgung 17 abgestellt, beispielsweise durch Abschalten des Motors des Kraftfahrzeugs, bei einem Defekt der Betriebsmitteldruckversorgung 17 oder bei Deaktivieren des Steuerventils 40 zur Schaltung der zweiten Ventilstellung, schiebt bzw. drückt die Feder 29 der Verriegelungseinheit 26 das Verriegelungselement 10 selbstständig in die Formschlusskontur 27, wodurch der Parksperrenkolben 11 in der Parkstellung verriegelt wird. Die Parksperre ist eingelegt.

In einem Betriebszustand, in dem die Parksperre ausgelegt und damit die Betätigungseinheit 19 in die Nicht-Parkstellung geschaltet wird, aktiviert die Steuer- und Regeleinheit zur Entriegelung des in der Parkstellung verriegelten Parksperrenkolbens 11 den elektromagnetischen Aktuator 13. Dadurch wirkt eine magnetische Entriegelungskraft auf das Verriegelungselement 10, die der Federkraft der Feder 29 entgegenwirkt, wodurch das Verriegelungselement 10 aus der Formschlusskontur 27 bewegt und der Parksperrenkolben 11 entriegelt wird. Bei aktiviertem elektromagnetischem Aktuator 13 deaktiviert die Steuer- und Regeleinheit das Steuerventil 40, wodurch das Steuerventil 40 die Vorsteuerdruckleitungen 37, 38 strömungstechnisch voneinander trennt. Dadurch herrscht in dem Steuervolumen 35 ein höherer konstanter Steuerdruck als in dem Steuervolumen 36, wodurch die Kraft in dem Steuervolumen 35 den Schaltschieber 32 in die zweite Ventilstellung verschiebt. Dadurch werden die Druckkammer 24 von dem drucklosen Betriebsmittelreservoir 34 und die Druckkammer des hydraulischen Aktuators 14 von der Arbeitsdruckleitung 39 strömungstechnisch getrennt, wobei die Druckkammer 24 gleichzeitig mit der Arbeitsdruckleitung 39 verbunden wird, wodurch die Druckkammer 24 mit dem Arbeitsdruck beaufschlagt wird. Dadurch wirkt eine Kraft gegen die Federkraft der Feder 16, wodurch der Parksperrenkolben 11 in die Nicht-Parkstellung verschoben wird. Anschließend deaktiviert die Steuer- und Regeleinheit zur Verriegelung der Nicht-Parkstellung den elektromagnetischen Aktuator 13, wodurch die Feder 29 das Verriegelungselement 10 selbstständig in die Formschlusskontur 28 verschiebt und den Parksperrenkolben 11 in der Nicht-Parkstellung verriegelt. Die Parksperre ist ausgelegt.

In diesem Ausführungsbeispiel wird der elektromagnetische Aktuator 13 lediglich zur Entriegelung des in der Parkstellung verriegelten Parksperrenkolbens 11 von der Steuer- und Regeleinheit bestromt und damit aktiviert. Der elektromagnetische Aktuator 13 kann aber auch zur Entriegelung des in der Parkstellung verriegelten Parksperrenkolbens 11 und zur Entriegelung des in der Nicht-Parkstellung verriegelten Parksperrenkolbens 11 von der Steuer- und Regeleinheit bestromt und damit aktiviert werden. Dadurch ist der hydraulische Aktuator 14 lediglich zur Notentriegelung vorgesehen. Dabei stellen der hydraulische Aktuator 14 und der elektromagnetische Aktuator 13 gleichzeitig die Entriegelungskraft zur Schaltung der Parkstellung bereit. Sie stellen somit eine redundante Entriegelungskraft bereit. Zur Schaltung der Parkstellung wirkt eine durch den hydraulischen Aktuator 14 bereitgestellte hydraulische Kraft und gleichzeitig eine durch den elektromagnetischen Aktuator 13 bereitgestellte magnetische Kraft auf das Verriegelungselement 10. Fällt nun der elektromagnetische Aktuator 13 aufgrund eines Defekts aus, wird der in der Nicht-Parkstellung verriegelte Parksperrenkolben 11 allein durch den hydraulischen Aktuator 14 entriegelt, wodurch auch bei einem Ausfall des elektromagnetischen Aktuators 13 die Parkstellung eingestellt werden kann.

## Patentansprüche

1. Kraftfahrzeugparksperrenvorrichtung mit zumindest einem Verriegelungselement (10), das dazu vorgesehen ist, einen Parksperrenkolben (11) formschlüssig zu verriegeln, und mit einer Entriegelungseinheit (12), die zumindest einen elektromagnetischen Aktuator (13) aufweist, der zur Entriegelung des Parksperrenkolbens (11) vorgesehen ist,
wobei die Entriegelungseinheit (12) einen parallel zu dem elektromagnetischen Aktuator (13) wirkenden weiteren Aktuator (14) aufweist, der dazu vorgesehen ist, zumindest bei einem Ausfall des elektromagnetischen Aktuators (13) den Parksperrenkolben (11) zu entriegeln,
**gekennzeichnet**
**dadurch, dass** der weitere Aktuator (14) ein hydraulischer oder pneumatischer Aktuator (14) ist,
sowie durch einen einfach wirkenden Betätigungszylinder (15), der zur Schaltung des Parksperrenkolbens (11) in eine Nicht-Parkstellung vorgesehen ist, und eine Feder (16), die zur Schaltung des Parksperrenkolbens (11) in eine Parkstellung vorgesehen ist
sowie durch eine Betriebsmitteldruckversorgung (17) und ein Schaltventil (18), das in einer ersten Ventilstellung den hydraulischen oder pneumatischen Aktuator (14) und in einer zweiten Ventilstellung den Betätigungszylinder (15) an die Betriebsmitteldruckversorgung (17) strömungstechnisch anbindet.

2. Kraftfahrzeugparksperrenvorrichtung nach Anspruch 1,
**dadurch gekennzeichnet, dass**
das Verriegelungselement (10) eine Formschlusskontur aufweist, die dazu vorgesehen ist, den Parksperrenkolben (11) hydraulisch oder pneumatisch unüberdrückbar zu verriegeln.

3. Kraftfahrzeugparksperrenvorrichtung zumindest nach Anspruch 1 oder 2,
**dadurch gekennzeichnet, dass**
das Verriegelungselement (10) dazu vorgesehen ist, den Parksperrenkolben (11) in der Parkstellung und in der Nicht-Parkstellung zu verriegeln.

4. Verfahren zur Entriegelung eines Parksperrenkolbens (11) einer Kraftfahrzeugparksperrenvorrichtung nach einem der vorhergehenden Ansprüche,
wobei der Parksperrenkolben (11) durch einen elektromagnetischen Aktuator (13) und durch einen hydraulischen oder pneumatischen Aktuator (14) entriegelt werden, und wobei ein in einer Nicht-Parkstellung verriegelter Parksperrenkolben (11) durch den hydraulischen oder pneumatischen Aktuator (14) und ein in einer Parkstellung verriegelter Parksperrenkolben (11) durch den elektromagnetischen Aktuator (13) entriegelt wird.

## Claims

1. Motor vehicle parking lock device with at least one locking element (10) provided for positively locking a parking lock piston (11) and with an unlocking unit (12) comprising at least one electromagnetic actuator (13) provided for unlocking the parking lock piston (11),
wherein the unlocking unit (12) comprises a further actuator (14), which acts in parallel with the electromagnetic actuator (13) and which is provided to unlock the parking lock piston (11) at least at a failure of the electromagnetic actuator (13),
**characterised in that**
the further actuator (14) is a hydraulic or pneumatic further actuator (14), and further **characterised by** a single-acting actuating cylinder (15) provided to switch the parking lock piston (11) into a non-parking position and by a spring provided to switch the parking lock piston (11) into a parking position,
and by an operating fluid pressure supply (17) and a switching valve (18), which fluidically connects the hydraulic or pneumatic further actuator (14) to the operating fluid pressure supply (17) in a first valve position and the actuating cylinder (15) to the operating fluid pressure supply (17) in a second valve position.

2. Motor vehicle parking lock device according to claim 1,
**characterised in that**
the locking element (10) has a positive-locking contour provided to lock the parking lock piston (11) hydraulically or pneumatically in a manner which cannot be overcome.

3. Motor vehicle parking lock device according to one or more of claims 1 and 2,
**characterised in that**
the locking element (10) is provided to lock the parking lock piston (11) in the parking position and in the non-parking position.

4. Method for unlocking a parking lock piston (11) of a motor vehicle parking lock device according to any of the preceding claims,
wherein the parking lock piston (11) can be unlocked by an electromagnetic actuator (13) or a hydraulic or pneumatic actuator (14) and wherein a parking lock piston (11) locked in a non-parking position is unlocked by the hydraulic or pneumatic actuator (14) and a parking lock piston (11) locked in a parking position is unlocked by the electromagnetic actuator (13).

## Revendications

1. Dispositif de frein de stationnement pour véhicule automobile comprenant au moins un élément de verrouillage (10), qui permet de verrouiller par complémentarité de formes un piston (11) de frein de stationnement, et comprenant une unité de déverrouillage (12) qui comporte au moins un actionneur électromagnétique (13) qui permet de déverrouiller le piston (11) de frein de stationnement, l'unité de déverrouillage (12) comportant un autre actionneur (14) agissant en parallèle avec l'actionneur électromagnétique (13), ledit autre actionneur permet au moins de déverrouiller les pistons (11) de frein de stationnement en cas de panne de l'actionneur électromagnétique (13), **caractérisé en ce que** l'autre actionneur (14) est un actionneur hydraulique ou pneumatique (14), ainsi que par un cylindre d'actionnement (15) à simple effet qui permet de commuter le piston (11) de frein de stationnement dans une position autre que celle de stationnement, et un ressort (16) qui permet de commuter le piston (11) de frein de stationnement dans une position de stationnement, ainsi que par une alimentation (17) en pression de service et une soupape (18) de commutation qui relie, sur le plan de l'écoulement, dans une première position de soupape l'actionneur hydraulique ou pneumatique (14) et dans une seconde position de soupape le cylindre d'actionnement (15) à l'alimentation (17) en pression de service.

2. Dispositif de frein de stationnement pour véhicule automobile selon la revendication 1, **caractérisé en ce que** l'élément de verrouillage (10) présente un contour par complémentarité de formes qui permet de verrouiller les pistons (11) de frein de stationnement hydrauliquement ou pneumatiquement sans surpression.

3. Dispositif de frein de stationnement pour véhicule automobile au moins selon la revendication 1 ou la revendication 2, **caractérisé en ce que** l'élément de verrouillage (10) permet de verrouiller les pistons (11) de frein de stationnement dans la position de stationnement et dans la position autre que celle de stationnement.

4. Procédé de déverrouillage d'un piston (11) de frein de stationnement d'un dispositif de frein de stationnement pour véhicule automobile selon l'une quelconque des revendications précédentes, le piston (11) de frein de stationnement est déverrouillé par un actionneur électromagnétique (13) et par un actionneur hydraulique ou pneumatique (14), et un piston (11) de frein de stationnement verrouillé dans la position de stationnement étant déverrouillé par l'actionneur hydraulique ou pneumatique (14) et un piston (11) de frein de stationnement verrouillé dans une position de stationnement étant déverrouillé par l'actionneur électromagnétique (13).
